Europäisches Patentamt

European Patent Office

Office européen des brevets

(11) Veröffentlichungsnummer: **0 196 412**
**B1**

(12) EUROPÄISCHE PATENTSCHRIFT

(45) Veröffentlichungstag der Patentschrift:
04.04.90

(51) Int. Cl.⁴: **A47B 88/14**

(21) Anmeldenummer: 86100881.1

(22) Anmeldetag: 23.01.86

(54) Führung, insbesondere für ausziehbare Möbelteile.

(30) Priorität: 20.02.85 DE 3505786

(43) Veröffentlichungstag der Anmeldung:
08.10.86 Patentblatt 86/41

(45) Bekanntmachung des Hinweises auf die Patenterteilung:
04.04.90 Patentblatt 90/14

(84) Benannte Vertragsstaaten:
AT FR GB IT NL

(56) Entgegenhaltungen:
GB-A- 473 026
US-A- 4 475 778

(73) Patentinhaber: Häfele KG, Postfach 160 Freudenstädter Strasse 74, D-7270 Nagold(DE)

(72) Erfinder: Hölzle, Roland, Rathausgasse 1,
D-7274 Halterbach(DE)

(74) Vertreter: Patentanwälte Dipl.-Ing. B. Schmid Dr.-Ing. G.A. Birn Dipl.-Ing. H. Quarder, Falbenhennenstrasse 17, D-7000 Stuttgart 1(DE)

## Beschreibung

Die vorliegende Erfindung betrifft eine für ausziehbare Möbelteile geeignete Führung mit einer Innenschiene und einer diese umschließenden Außenschiene gemäß Oberbegriff des Patentanspruchs 1.

Ausziehführungen der zuvor angegebenen Art sind bereits allgemein bekannt. Bei einer beispielsweise durch die USA-Patentschrift 4 475 778 vorbekannten Bauform ist eine etwa im Querschnitt dreieckförmige Innenschiene und eine Außenschiene vorgesehen. Diese Außenschiene greift dabei um die Innenschiene in der Form eines Käfigs herum und dient gleichzeitig der Aufnahme und der Lagerung der Laufkugeln. Beim Ausziehen beispielsweise einer Schublade rollen die Kugeln dabei auf diesen zugeordneten Kugellaufbahnen, die durch das Innenlaufprofil und die Außenschiene vorgegeben sind. Die Herstellung solcherart ausgestalteter Auszugsführungen ist jedoch immer noch recht kompliziert. Einerseits sind speziell ausgebildete Innenlaufprofile vorzusehen, die teuer in der Herstellung sind. Zum anderen wird zur Herstellung einer solchen Führung eine Vielzahl von Kugeln benötigt. Dies bedingt jedoch sowohl einen hohen Materialaufwand als auch eine relativ schwierige Montage.

Gegenüber diesen vorbekannten und sehr individuell ausgebildeten Führungen liegt der Erfindung nun die Aufgabe zugrunde, eine Führung zu schaffen, die aus möglichst einfachen und wenigen handelsüblichen Teilen herstellbar ist.

Erfindungsgemäß wird diese Aufgabe durch die im Anspruch 1 angegebenen Merkmale gelöst.

Da die Innen- und Außenschienen jeweils zueinander parallele Laufflächen aufweisen, ist es möglich, zwischen den Laufflächen in etwa zylindrische Laufrollen zu lagern. Durch diese besondere Ausbildung der zueinander parallelen Laufflächen lassen sich die Innen- und Außenschienen jeweils als einfache Biegeteile herstellen, was wieder die Fertigung derselben außerordentlich vereinfacht. Die Verwendung derartiger Laufrollen ermöglicht es außerdem den Raum zwischen den Innen- und Außenschienen auf einfache Art und Weise auszufüllen, wobei sich die Laufrollen dann einzeln oder gruppenweise abwechselnd an jeweils zwei der vier paarweise aneinander parallelen Laufflächen abstützen und somit eine gute Führung bewirken. Es ist somit möglich, eine Abstützung der Innen- und Außenschiene auf vier Seiten zu erreichen.

Vorteilhafte und zweckmäßige Ausgestaltungen der Erfindung sind in den Unteransprüchen gekennzeichnet. Besonders einfach ist die Herstellung der Laufrollen, wenn sie in ihrem Querschnitt annähernd quadratisch, also gleich gestaltet sind. Zum Einfüllen der Laufrollen ist dann eine Sorte von Laufrollen ausreichend.

Ein besonders wesentlicher Vorteil der Erfindung ist es, daß durch die Aufwinkelung der Innenschiene und durch die umschließende Außenschiene nur zwei Rollenbereiche gebildet sind, die gefüllt werden müssen. Die Zahl der benötigten Rollen ist daher im Gegensatz zu den bekannten Ausbildungen mit Kugeln wesentlich reduziert. Dies bringt eine erhebliche Materialersparnis mit sich, wobei durch die spezielle Anordnung der Laufrollen eine gleichbleibende bzw. sogar verbesserte Stabilität gegeben ist. Dies schließt jedoch nicht aus, daß für besonders hohe Anforderungen auch drei oder mehr Rollenbereiche zu bilden sind. Besonders vorteilhaft ist es, wenn sich die Rollenbereiche im wesentlichen gegenüberliegen, da dann eine gleichmäßige Verteilung der Kräfte gegeben ist. Sollen jedoch bestimmte Belastungen aufgefangen werden, so ist es möglich, die Rollenbereiche in unterschiedlichen Winkeln zueinander anzuordnen, so daß ein optimales Auffangen der Belastung gegeben ist.

Die Herstellung der Führung ist besonders einfach, da die Innenschiene einstückig ausgebildet ist, wobei der in die Außenschiene hineinragende Teil im wesentlich dreieckförmig gebogen ist, und die Schenkel des Dreiecks zumindest teilweise Laufflächen bilden. Bei diesem Vorgehen ist die Innenschiene in einem einzigen Arbeitsgang herstellbar.

Eine weitere Vereinfachung der Herstellung läßt sich erzielen, wenn die Laufrollen sich gruppenweise abwechselnd an jeweils zwei der vier Laufflächen abstützen. Ein abwechselndes, um 90° verdrehtes Anordnen ist dann nicht mehr erforderlich, da auch Gruppen von zwei und mehr gleichliegenden Laufrollen in die Käfige einfüllbar sind. Um spezielle Belastungsverhältnisse abzufangen, ist es zweckmäßig, die Zahl einer Gruppe unterschiedlich von der Zahl der anderen Gruppe zu wählen. Durch diese Maßnahme sind die am stärksten belasteten Laufflächen durch mehr Laufrollen abgestützt, als die weniger stark belasteten Laufflächen eines Käfigs.

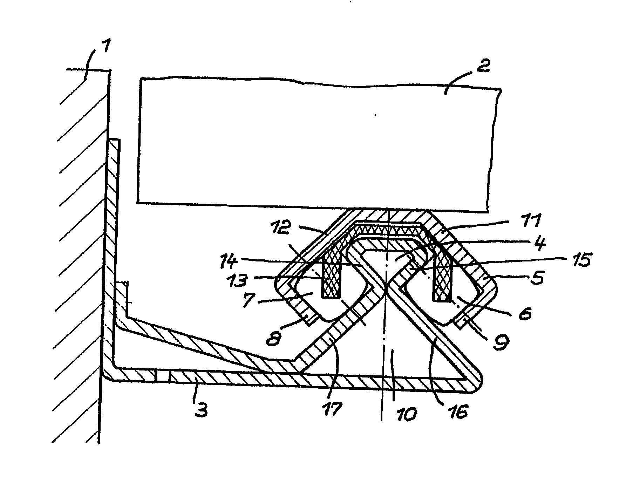

In der Zeichnung ist ein Ausführungsbeispiel der Erfindung in einem abgebrochenen Schnitt dargestellt.

Mit 1 ist die Wand eines Möbelteiles bezeichnet. An dem Möbelteil ist eine Innenschiene 3 befestigt. Die Innenschiene 3 ist als einstückiges Biegeteil ausgeführt. Unterhalb einer Außenschine 5 ist das Biegeteil als gleichschenkliges Dreieck 10 ausgebildet. Den gleichschenkligen Dreieckteilen ist ein gleichschenkliges Dreieck 4 aufgesetzt, das vollständig innerhalb der Außenschiene 5 liegt. Die Außenschiene 5 umfaßt gleichzeitig einen Teil des größeren gleichschenkligen Dreieckes 10. Die Schenkel der im rechten Winkel aufeinanderstehenden Dreiecke 4 und 10 bilden untereinander einen Winkel von 90°.

Die Schenkel der Außenschiene 5 sind so gebogen, daß das Schenkelteil 8 und das Schenkelteil 9 zu den Schenkeln 14, 15 des Dreiecks 4 parallel liegen. Ebenso liegen die Schenkelteile 11 und 12 der Außenschiene 5 parallel zu den Schenkeln 16, 17 des Dreieckes 10. Dadurch bilden sich zwei Laufbahnen aus, die mit Laufrollen 6 und 7 gefüllt sind. Die Laufrollen 6 und 7 sind vorzugsweise in Länge und Druchmesser gleich ausgebildet und werden abwechselnd mit ihren Achsen senkrecht zueinander so eingefüllt, daß einmal die Lauffläche durch die Schenkel 16, 17 des Dreieckes 10 und die Schenkel 11 und 12 gebildet wird und ein anderes Mal durch die Schenkel 14, 15 des Dreiecks 4 sowie die Schenkel 8 und 9 der Außenschiene 5. Dadurch wird erreicht, daß sowohl eine seitliche als auch eine nach unten wirkende Abstützung erzielt wird. Es ist nicht unbedingt notwendig, die Laufrollen jedesmal abwechselnd um jeweils 90° verdreht einzufüllen. Zur Vereinfachung des Abfüllvorganges ist es ebenfalls möglich, die Laufrollen gruppenweise gleichsinnig einzufügen, so daß beispielsweise immer drei Laufrollen hintereinander in einer Richtung liegen.

Ist zu erwarten, daß die Kräfte in einer Richtung größer sind als in der anderen Richtung, so ist es möglich, die Laufrollen in einer Laufbahn nicht gleichmäßig zu verteilen, sondern mehr Laufrollen für die Laufflächen einzufügen, die stärker belastet sind. Auf der Außenschiene 5 ist nun das auszuziehende Teil, beispielsweise eine Schublade 2 gelagert.

Die Laufrollen 6 und 7 werden durch einen einzigen Käfig 13 gehalten, der zwischen dem Dreieck 4 und dem Schenkel 11 und 12 eingebracht ist.

Je nach Ausgestaltung der sich bildenden Käfige ist es weiterhin möglich, die Laufrollen 6 und 7 auch länglich auszubilden.

## Patentansprüche

1. Führung für ausziehbare Möbelteile, mit einer als einstückiges Biegeteil ausgebildeten Innenschiene (3) und einer diese umschließenden Außenschiene (5), welche Schienen (3, 5) einander gegenüber liegende Laufflächen (8, 9, 11, 12; 14 bis 17) für zwischen ihnen eingeschlossene Wälzkörper (6, 7) aufweisen, dadurch gekennzeichnet, daß die Innen- (3) und die Außenschiene (5) mit jeweils zwei zueinander rechtwinklig angeordneten Laufflächen (8, 9; 11, 12; 14 bis 17) versehen sind, welche gemeinsam jeweils einen im Querschnitt rechteckigen Kanal mit den vier Laufflächen bilden, in welchem sich in etwa zylindrische Laufrollen (6, 7) einzeln oder gruppenweise abwechselnd an jeweils zwei gegenüberliegenden der senkrecht zueinander stehenden Laufflächen (8, 9; 11, 12; 14 bis 17) abstützen, und daß die Laufflächen (15, 16; 14, 17) der Innenschiene (3) im Querschnitt gesehen durch die Katheten (15, 16; 14, 17) zweier rechtwinkliger, in ihrer Spitze gegenüberliegender Dreiecke (4, 10) gebildet sind.

2. Führung nach Anspruch 1, dadurch gekennzeichnet, daß die in etwa zylindrischen Laufrollen (6, 7) in Länge und Durchmesser gleich sind und der von vier Laufflächen gebildete Kanal einen quadratischen Querschnitt aufweist.

3. Führung nach Anspruch 1 oder 2, dadurch gekennzeichnet, daß die Zahl der einen Gruppe der Laufrollen (6, 7) unterschiedlich ist von der Zahl der anders angeordneten Gruppe von Laufrollen (6, 7).

## Claims

1 A guide for pull-out furniture parts, having, constructed as a one-piece bending part, an inner rail (3) and enclosing this an outer rail (5), the said rails (3, 5) having mutually oppositely disposed surfaces (8, 9, 11, 12; 14 to 17) on which it is possible for rolling bodies (6, 7) enclosed between them to run characterised in that the inner (3) and outer rail (5) are provided with in each case and disposed at a right-angle to each other working surfaces (8, 9, 11, 12; 14 to 17) which together form a cross-sectionally rectangular passage with the four working surfaces in which substantially cylindrical rollers (6, 7) are supported individually or in groups alternately on in each case two oppositely disposed working surfaces (8, 9, 11, 12; 14 to 17) which are at right-angles to one another and in that the working surfaces (15, 16; 14, 17) of the inner rail (3), viewed in cross-section, are formed by the cathetuses (15, 16; 14, 17) of two right-angle triangles (4, 10), of which the apices are opposite each other.

2. A guide according to Claim 1, characterised in that the substantially cylindrical rollers (6, 7) are identical in length and diameter and in that the passage formed by four working surfaces has a square cross-section.

3. A guide according to Claim 1 or 2, characterised in that the number of one group of rollers (6, 7) differs from the number of the otherwise disposed group of rollers (6, 7).

## Revendications

1. Guidage destiné à des éléments de meubles coulissants et comprenant un rail intérieur (3) qui est réalisé sous la forme d'une pièce pliée d'un seul tenant et un rail extérieur (5) qui l'entoure, lesdits rails (3, 5) présentant des surfaces de roulement (8, 9, 11, 12; 14 à 17) opposées les unes aux autres et destinées à des organes de roulement (6, 7) qui sont enfermés entre elles, caractérisé par le fait que les rails intérieur (3) et extérieur (5) sont chacun munis de deux surfaces de roulement (8, 9; 11, 12; 14 à 17) disposées perpendiculairement entre elles et formant ensemble à chaque fois un canal à section rectangulaire qui comprend les quatre surfaces de roulement et dans lequel des galets sensiblement cylindriques (6, 7) s'appuient à chaque fois alternativement, un par un ou par groupes, sur deux des surfaces de roulement perpendiculaires entre elles (8, 9; 11, 12; 14 à 17) qui se font face, et par le fait que les surfaces de roulement (15, 16; 14, 17) du rail intérieur (3), lorsqu'elles sont vues en coupe transversale, sont constituées par les côtés de l'angle droit (15, 16; 14, 17) de deux triangles rectangles (4, 10) opposés par rapport à leurs pointes.

2. Guidage selon la revendication 1, caractérisé par le fait que la longueur et le diamètre des galets sensiblement cylindriques (6, 7) sont égaux, et que le canal constitué par quatre surfaces de roulement présente une section transversale carrée.

3. Guidage selon la revendication 1 ou 2, caractérisé par le fait que le nombre des galets (6, 7) de l'un des groupes est différent du nombre des galets (6, 7) du groupe des galets qui sont disposés différemment.

EP 0 196 412 B1